# EUROPEAN PATENT SPECIFICATION

(11) **EP 1 796 920 B1**
(45) Date of publication and mention of the grant of the patent: **25.04.2012**
(21) Application number: 05794548.7
(22) Date of filing: 27.09.2005
(51) Int. Cl.: B60B 1/04, B60B 1/00, B60B 21/06

(54) **A SPOKE AND NIPPLE ASSEMBLY FOR A SPOKED WHEEL, AND A SPOKED WHEEL INCLUDING A PLURALITY OF SAID ASSEMBLIES**
SPEICHEN- UND NIPPELANORDNUNG FÜR EIN SPEICHENRAD UND SPEICHENRAD MIT MEHREREN DIESER ANORDNUNGEN
ENSEMBLE RAYON-TETON POUR ROUE A RAYONS, ET ROUE A RAYONS COMPRENANT UNE PLURALITE DESDITS ENSEMBLES

(30) Priority: 04.10.2004 IT PD20040241
(43) Date of publication of application: 20.06.2007
(73) Proprietor: ALPINA RAGGI S.p.A., 23871 Lomagna (LC) (IT)
(72) Inventor: ALBERIO, Fabio, I-20092 Cinisello Balsamo (IT); CAPPELLOTTO, Guido, 20043 ARCORE (MI) (IT)
(74) Representative: Cantaluppi, Stefano
(86) International application number: PCT/IT2005/000550
(87) International publication number: WO 2006/038239

(56) References cited:
- WO-A-2004/054819
- WO-A-2004/101294
- GB-A- 1 137 902
- US-A- 4 729 605
- US-A- 5 350 221

## Description

### Technical field

The invention relates to a spoke and nipple assembly for a spoked wheel and to a spoked wheel produced by assembling a plurality of said assemblies.

Such an assembly according to the preamble of claim 1 is known from WO 2004/054819 A.

### Technological background

The technical solution proposed by this invention is particularly suitable for the manufacture of spoked wheels having spokes of light alloy, the spread of which is enjoying increasing success also owing to the fact that they permit a substantial reduction of the rotating masses while maintaining the same degree of strength.

A principal problem in the manufacture of such wheels is that of manufacturing spokes that have a structure which is strong and reliable over time, and that are not subject to yielding and that are readily adjustable for a correct adjustment of the wheel.

### Description of the invention

Those problems are solved by a spoke and nipple assembly manufactured in accordance with the claims, which follow.

### Brief description of the drawings

The features and advantages of the invention will emerge more clearly from the detailed description of some of its embodiments which are illustrated by way of non-limiting example with reference to the appended drawings in which:
- Figure 1 is a diagrammatic sectioned view of a spoked wheel manufactured in accordance with a first embodiment of this invention;
- Figures 2 and 3 are diagrammatic sectioned views of a second and third embodiment, respectively, of a spoked wheel according to the invention;
- Figures 4 to 6 are analogous diagrammatic sectioned views of further embodiments of a spoked wheel according to the invention.

### Preferred embodiments of the invention

In the drawings, a spoked wheel manufactured in accordance with the invention is generally indicated 1. The wheel comprises a rim 2 and a hub 3 which are joined to each other by means of a plurality of spoke and nipple assemblies which are respectively indicated 10 in the first embodiment, 20 in the second embodiment, 30 in the third embodiment, 40 in the fourth embodiment, 50 in the fifth and 60 in the sixth.

Analogous or technically equivalent parts will be indicated by the same reference numerals in the six embodiments described here.

The particular feature of this invention is that the spoke is substantially integrated with the nipple with which it is constrained on the one or the other of the rim and the hub.

In all of the embodiments, the nipple comprises a head 11 on which is formed an operating key 12, for example a polygonal key or a hexagonal socket or a flat-cut or cross-shaped key; at the base of the head 11 is a flange 13 constituting an abutment member with which the nipple is held inside a groove 14 in the rim in abutment therewith. A cylindrical shank 15, which is preferably manufactured integrally with the nipple, extends from the flange 13.

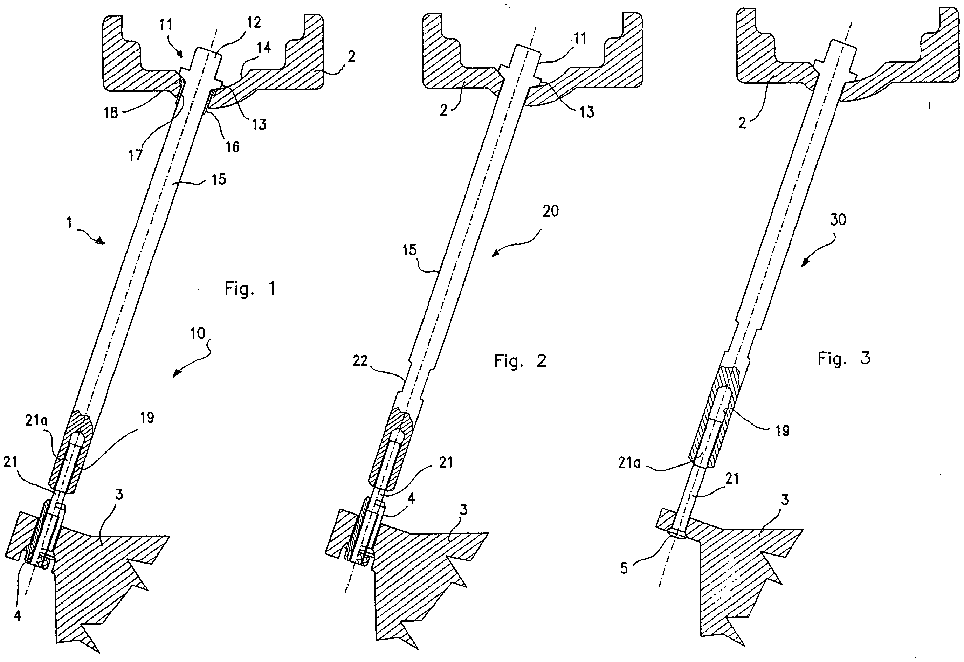

In the embodiment of Figure 1, the end of the shank proximal to the flange 13 of the nipple has a thread 16 and is engaged in a hole 17 in the rim with the interposition of a seal 18.

This embodiment is suitable for the construction of wheels intended for the fitting of tyres without an air chamber, so-called tubeless tyres. However, this is not a preferred solution for this invention.

At the distal end of the shank relative to the flange 13 is a threaded axial hole 19 in which a threaded portion 21a of a tension rod 21 engages. In the embodiments of Figures 1 and 2, the tension rod 21 is connected in an adjustable manner to the hub 3 by means of an adjusting nipple 4 having a structure which is conventional *per se.*

The tension rod 21 and the shank 15 together constitute the stem of the spoke and are arranged one as the axial extension of the other.

In the embodiment of Figure 2, the threaded coupling between the shank and the hole in the rim 2 provided in the previous embodiment has been eliminated. An auxiliary key 22 formed along the shank 15 and preferably in the vicinity of the distal end thereof relative to the flange 13 is also provided.

The embodiment of Figure 3 differs from the previous embodiments owing to the fact that the threaded stem 21 has, at a free end thereof, a head 5, this term meaning any shaping suitable for locking the spoke axially. The adjustment of the wheel is obtained in this case by varying the screwing condition of the tension rod 21 in the hole 19.

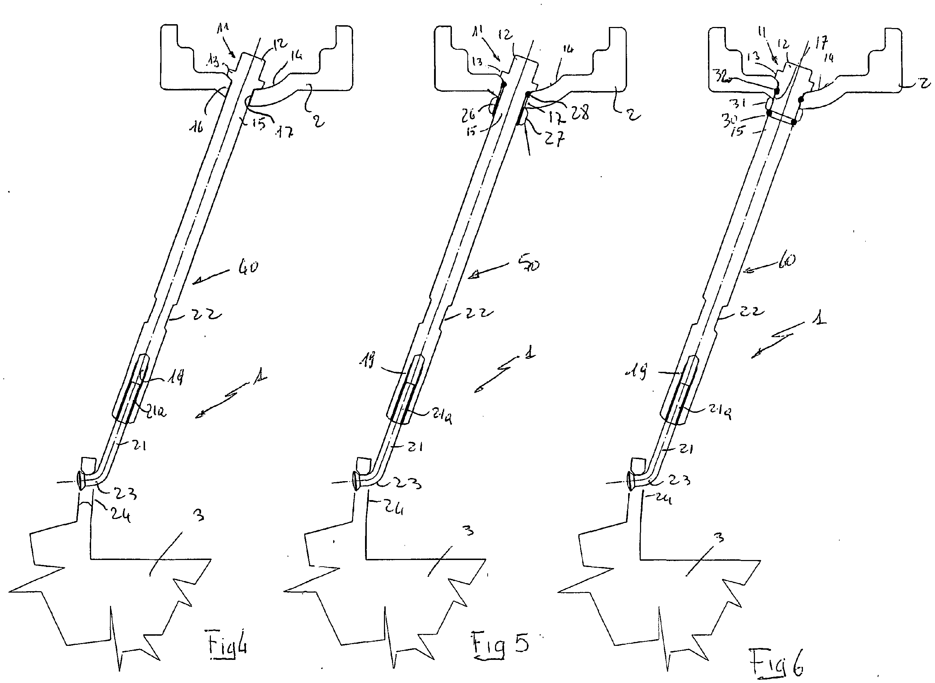

In the embodiment of Figures 4 to 6, the tension rod 21 has a head 23 which is of the elbow type, and which slides to a limited extent in a slotted seat 24 formed in the corresponding fringe of the hub 3.

In Figure 5, the hole 17 in the rim is free from threading, while the corresponding portion 26 of the nipple is threaded and is in turn locked axially relative to the rim by means of a nut 27. The sealing between the rim and the nipple is provided by a seal 28 which is compressed between the groove 14 in the rim and the flange 13.

In the embodiment of Figure 6, the stem 15 of the nipple and the associated hole 17 in the rim are free from threading, and locking is obtained by means of a resilient ring 30 with an interposed spacer 31, while sealing is provided by a seal 32 placed preferably along the axial length of the hole 17.

Preferably, the nipple with the associated shank of the embodiments described above is produced from aluminium alloy or another light alloy or else from composite materials based on carbon fibre or having an organic or metal matrix, while the tension rod 21 is produced from steel.

The invention thus solves the problem set, achieving numerous advantages over conventional spoke and nipple assemblies.

These include the substantial lightness, the ease of adjustment, and also the fact of providing a second, auxiliary, key which enables torsion in the shank of the nipple to be prevented during the mounting and adjustment of the wheel.

## Claims

1. A spoke and nipple assembly for a spoked wheel, the assembly being arranged to connect a rim (2) and a hub (3) in order to constitute the spoked wheel, the nipple comprising shank (15) which extends from an abutment member (13) arranged to hold the nipple in one of the rim and the hub (2, 3) **characterized in that** the shank (15) extends as far as the vicinity of the other of the rim and the hub in order to constitute a predominant portion of the spoke (1).

2. An assembly according to claim 1, wherein the shank (15) is integral with the nipple.

3. An assembly according to claim 1 or 2, wherein at least one key (12) is provided on the nipple.

4. An assembly according to one or more of the preceding claims, wherein at least one key (22) is provided on the shank.

5. An assembly according to claim 3 or 4, wherein one of the keys (12) is formed on a head of the nipple.

6. An assembly according to one or more of the preceding claims, wherein the shank (15) has, at a distal end remote from the abutment member (13), a coupling member of adjustable length with which the shank can be adjustably constrained on the other of the rim and the hub.

7. An assembly according to claim 6, wherein the coupling member comprises a tension rod (21) as an extension of the shank.

8. An assembly according to claim 7, wherein the tension rod is provided for threaded coupling to an adjusting nipple (4).

9. An assembly according to one or more of claims 6 to 8, wherein the tension rod is held in a hole (19) in the distal end of the shank (15).

10. An assembly according to claim 9, wherein the tension rod (21) is screwed into the hole (19).

11. An assembly according to claim 10, wherein the tension rod has, at a free end, a head (5).

12. An assembly according to one or more of the preceding claims, wherein the nipple, with the shank, is produced from light alloy.

13. A spoked wheel comprising a rim and a hub which are interconnected by means of a plurality of assemblies according to one or more of the preceding claims.

## Patentansprüche

1. Speichen- und Nippelanordnung für ein Speichenrad, wobei die Anordnung dazu ausgebildet ist, dass sie eine Felge (2) und eine Nabe (3) verbindet, um das Speichenrad zu bilden, wobei der Nippel ein Einsteckende (15) umfasst, das sich von einem Anschlagelement (13) erstreckt, das dazu ausgebildet ist, dass es den Nippel in der Felge (2) oder der Nabe (3) hält, **dadurch gekennzeichnet, dass** das Einsteckende (15) sich bis zum Bereich des anderen von Felge oder Nabe erstreckt, um einen überwiegenden Teil der Speiche (1) zu bilden.

2. Anordnung nach Anspruch 1, wobei das Einsteckende (15) integral mit dem Nippel ausgebildet ist.

3. Anordnung nach Anspruch 1 oder 2, wobei mindestens ein Mitnahmeprofil (12) am Nippel vorgesehen ist.

4. Anordnung nach einem oder mehreren der vorhergehenden Ansprüche, wobei mindestens ein Mitnahmeprofil (22) am Einsteckende vorgesehen ist.

5. Anordnung nach Anspruch 3 oder 4, wobei eines der Mitnahmeprofile (12) an einem Kopf des Nippels ausgebildet ist.

6. Anordnung nach einem oder mehreren der vorhergehenden Ansprüche, wobei das Einsteckende (15) an einem distalen Ende fern vom Anschlagelement (13) ein Kopplungselement mit einstellbarer Länge aufweist, mit dem das Einsteckende am anderen von Felge oder Nabe einstellbar festgelegt sein kann.

7. Anordnung nach Anspruch 6, wobei das Kopplungselement einen Spannstab (21) als Verlängerung des Einsteckendes umfasst.

8. Anordnung nach Anspruch 7, wobei der Spannstab für eine Gewindekopplung an einen Einstellnippel (4) vorgesehen ist.

9. Anordnung nach einem oder mehreren der Ansprüche 6 bis 8, wobei der Spannstab in einer Bohrung (19) im distalen Ende des Einsteckendes (15) gehalten ist.

10. Anordnung nach Anspruch 9, wobei der Spannstab (21) in die Bohrung (19) eingeschraubt ist.

11. Anordnung nach Anspruch 10, wobei der Spannstab an einem freien Ende einen Kopf (5) aufweist.

12. Anordnung nach einem oder mehreren der vorhergehenden Ansprüche, wobei der Nippel mit dem Einsteckende aus einer Leichtmetalllegierung gebildet ist.

13. Speichenrad umfassend eine Felge und eine Nabe, die mittels einer Mehrzahl von Anordnungen nach einem oder mehreren der vorhergehenden Ansprüche miteinander verbunden sind.

## Revendications

1. Ensemble rayon-embout pour une roue à rayons, l'ensemble étant agencé pour connecter une jante (2) et un moyeu (3) afin de constituer la roue à rayons, l'embout comprenant un tronc (15) qui s'étend depuis un élément de butée (13) agencé pour tenir l'embout dans un élément parmi la jante et le moyeu (2, 3),
**caractérisé en ce que** le tronc (15) s'étend aussi loin que le voisinage de l'autre élément parmi la jante et le moyeu afin de constituer une portion prédominante du rayon (1).

2. Ensemble selon la revendication 1, dans lequel le tronc (15) est réalisé de manière intégrale avec l'embout.

3. Ensemble selon la revendication 1 ou 2, dans lequel au moins une clé (12) est prévue sur l'embout.

4. Ensemble selon l'une ou plusieurs des revendications précédentes, dans lequel au moins une clé (22) est prévue sur le tronc.

5. Ensemble selon la revendication 3 ou 4, dans lequel l'une des clés (12) est formée sur une tête de l'embout.

6. Ensemble selon l'une ou plusieurs des revendications précédentes, dans lequel le tronc (15) possède, à une extrémité distale éloignée de l'élément de butée (13), un élément de couplage de longueur ajustable avec lequel le tronc peut être contraint de façon ajustable sur l'autre élément parmi la jante et le moyeu.

7. Ensemble selon la revendication 6, dans lequel l'élément de couplage comprend une tige de traction (21) à titre d'extension du tronc.

8. Ensemble selon la revendication 7, dans lequel la tige de traction est prévue pour un accouplement vissé avec un embout d'ajustement (4).

9. Ensemble selon l'une ou plusieurs des revendications 6 à 8, dans lequel la tige de traction est tenue dans un trou (19) dans l'extrémité distale du tronc (15).

10. Ensemble selon la revendication 9, dans lequel la tige de traction (21) est vissée dans le trou (19).

11. Ensemble selon la revendication 10, dans lequel la tige de traction possède, à une extrémité libre, une tête (5).

12. Ensemble selon l'une ou plusieurs des revendications précédentes, dans lequel l'embout, avec le tronc, est produit en alliage léger.

13. Roue à rayon comprenant une jante et un moyeu qui sont interconnectés au moyen d'une pluralité d'ensembles selon l'une ou plusieurs des revendications précédentes.
